# FASCICULE DE BREVET EUROPEEN

(11) **EP 4 330 027 B1**
(45) Date de publication et mention de la délivrance du brevet: **04.06.2025**
(21) Numéro de dépôt: 22735515.3
(22) Date de dépôt: 22.04.2022
(51) Int. Cl.: B29D 99/00, B29B 11/16, B29C 70/44, B29C 70/54, F01D 5/28, B29L 31/08, F01D 9/04

(54) **DISPOSITIF DE MISE EN FORME D'UNE PREFORME FIBREUSE POUR LA REALISATION D'UNE PIECE AUBAGEE DE TURBOMACHINE**
VORRICHTUNG ZUM FORMEN EINER FASERIGEN VORFORM ZUR HERSTELLUNG EINES BESCHAUFELTEN TEILS EINES TURBINENMOTORS
DEVICE FOR SHAPING A FIBROUS PREFORM IN ORDER TO PRODUCE A BLADED PART OF A TURBINE ENGINE

(30) Priorité: 28.04.2021 US 202117242944; 16.12.2021 FR 2113617
(43) Date de publication de la demande: 06.03.2024
(73) Titulaire: SAFRAN AIRCRAFT ENGINES, 75015 Paris (FR)
(72) Inventeur: BLAISE, Maxime Marie Désiré, 77550 Moissy-Cramayel (FR); FABRE, Hubert Jean Marie, 77550 Moissy-Cramayel (FR); POTE, Jeff, 77550 Moissy-Cramayel (FR)
(74) Mandataire: Gevers & Orès
(86) Numéro de dépôt international: PCT/FR2022/050766
(87) Numéro de publication internationale: WO 2022/229548

(56) Documents cités:
- FR-A1- 3 014 008
- FR-A1- 3 029 134
- FR-B1- 2 943 942
- FR-B1- 3 022 829
- FR-B1- 3 085 131

## Description

### Domaine technique de l'invention

La présente invention concerne un dispositif de mise en forme d'une préforme fibreuse pour la réalisation d'une pièce aubagée de turbomachine, ainsi qu'un procédé utilisant ce dispositif.

### Arrière-plan technique

L'état de la technique comprend notamment les documents FR-A1-3 014 008, FR-A1-3 029 134, FR-B1-2 943 942, FR-B1-3 022 829, FR-B1-3 085 131 et FR-A1-3 046 404, .

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.*

Il s'agit d'un procédé de réalisation d'une pièce en matériau composite à base de fibres imprégnées de résine. Un tel procédé est par exemple utilisé pour fabriquer une pièce aubagée de turbomachine telle qu'une aube de soufflante ou un aubage de redresseur.

Un procédé RTM comporte plusieurs étapes successives.

On commence par réaliser le tissage de fibres pour obtenir une ébauche de préforme en trois dimensions, puis on découpe l'ébauche pour obtenir une préforme présentant sensiblement la forme de la pièce aubagée à obtenir. Cette préforme est alors disposée dans un moule, qui est refermé.

Dans la technique actuelle, ce moule a deux fonctions ou deux utilisations successives. Le moule sert d'abord à réaliser une mise en forme de la préforme par compression à chaud. Il est ainsi mis sous presse et en étuve afin de comprimer la préforme et la rigidifier.

Le moule sert ensuite à injecter de la résine dans la préforme en vue de son imprégnation. La résine est injectée à travers un port d'alimentation du moule qui est ensuite mis en étuve pour provoquer la polymérisation de la résine et son durcissement.

La pièce aubagée est ensuite retirée du moule et peut subir différentes opérations successives notamment de finition.

Il est avantageux d'utiliser un seul moule pour la réalisation des deux étapes de mise en forme et d'injection de résine. Cependant, l'inconvénient de cette technologie est que le moule ne peut pas être spécifiquement adapté et optimisé pour l'une de ces étapes puisqu'il doit aussi convenir pour la réalisation de l'autre étape. Il cumule les contraintes des deux étapes et est donc plus complexe et plus coûteux.

Ce moule n'est de plus pas adapté pour la réalisation d'autres fonctions telles que le positionnement et la fixation d'un bouclier métallique sur un bord d'attaque de la pièce aubagée.

Le matériau composite de la pièce aubagée est relativement fragile, et en particulier sensible aux chocs, et il est connu de le protéger au moyen d'un bouclier métallique qui est rapporté et fixé sur le bord d'attaque de la pièce aubagée.

Le bouclier peut être fixé à la pale de plusieurs façons. Une première façon consiste à coller le bouclier sur la pièce aubagée, après polymérisation de la résine.

Une seconde façon de fixer un bouclier sur une pièce aubagée consiste à fixer le bouclier par co-moulage avec la préforme fibreuse. La préforme est disposée dans le moule et le bouclier est positionné voir collé sur le bord de la préforme destiné à former le bord d'attaque de la pale. La résine injectée imprègne la préforme et vient au contact du bouclier pour assurer sa solidarisation à la pale après polymérisation et durcissement. Un film de colle peut être interposé entre la préforme et le bouclier et est alors destiné à polymériser en même temps que la résine, ce qui rend l'appairage plus facile et supprime un cycle thermique sur la pièce finie.

Le moule précité de la technique actuelle n'est pas adapté au positionnement du bouclier sur la préforme ni à sa fixation.

La présente invention propose une solution à ces problèmes qui consiste à proposer un dispositif spécifiquement adapté à la mise en œuvre d'une seule des fonctions précitées, à savoir ici la mise en forme de la préforme, et qui est apte à réaliser également l'appairage du bouclier métallique au bord d'attaque de la préforme.

### Résumé de l'invention

L'invention concerne un dispositif de mise en forme d'au moins une préforme fibreuse pour la réalisation d'une pièce aubagée de turbomachine, ce dispositif comportant un moule formé de plusieurs pièces imbriquées les unes dans les autres, ce moule définissant au moins une cavité interne configurée pour recevoir la préforme et pour enfermer intégralement ladite préforme, cette cavité étant destinée à avoir deux zones de plateforme et une zone de pale s'étendant entre les deux zones de plateforme,
caractérisé en ce que ledit moule comprend au moins :
   - une coque inférieure qui forme une extrémité inférieure du moule et qui comprend une surface incurvée convexe de ladite zone de pale,
   - une coque supérieure qui forme une extrémité supérieure du moule et qui comprend une surface incurvée concave de ladite partie de pale, les coques supérieure et inférieure étant fixées l'une sur l'autre, définissant un premier côté du moule et formant entre elles une première rainure de formation d'un bord de fuite de ladite zone de pale,
   - une coque latérale qui forme un second côté du moule, ce second côté étant opposé au premier côté et formant une seconde rainure de formation d'un bord d'attaque de ladite zone de pale, et
   - des coques d'extrémité situées à deux extrémités opposées du moule et entre lesquelles s'étendent les coques inférieure, supérieure et latérale, ces coques d'extrémité formant respectivement au moins une partie desdites zones de plateforme,
et en ce que chacune des coques latérale et d'extrémité comprend trois éléments, respectivement inférieur, intermédiaire et supérieur, les éléments des coques latérale et d'extrémité étant fixés de manière indépendante et amovible de façon à pouvoir être démontés et retirés du moule sans démontage des coques supérieure et inférieure.

Le dispositif est spécifiquement conçu et optimisé pour réaliser la mise en forme de la préforme, cette mise en forme étant de préférence réalisée par compression et chauffage de la préforme dans le moule. Le dispositif selon l'invention est de plus avantageusement conçu pour permettre le positionnement précis du bouclier métallique sur le bord d'attaque de la préforme.

Les différentes pièces du moule permettent de faciliter l'assemblage du moule autour de la préforme ainsi que le démontage du moule, et en particulier le démontage partiel du moule. Les éléments des coques d'extrémité peuvent en effet être montés et démontés indépendamment des coques supérieure et inférieure. Les éléments de la coque latérale peuvent également être montés et démontés de manière indépendante, ce qui permet d'avoir accès au bord d'attaque de la préforme en vue du positionnement du bouclier.

La surface incurvée convexe de la coque inférieure est configurée pour être complémentaire du côté concave de la pale, appelé intrados. La surface incurvée concave de la coque supérieure est configurée pour être complémentaire du côté convexe de la pale, appelé extrados.

Le dispositif de mise en œuvre selon l'invention peut comprendre une ou plusieurs des caractéristiques suivantes, prises isolément les unes des autres, ou en combinaison les unes avec les autres :
- les trois éléments de ladite coque latérale comprennent :
   + un élément de coque inférieur qui est situé sous ladite seconde rainure et qui comprend une première surface supérieure de glissement,
   + un élément de coque intermédiaire qui est situé sur l'élément de coque inférieur et qui définit une partie inférieure de ladite seconde rainure, cet élément de coque intermédiaire comportant une seconde surface inférieure de glissement qui est configurée pour coopérer par glissement avec ladite première surface lors d'un démontage de l'élément de coque intermédiaire, et
   + un élément de coque supérieur qui est situé sur l'élément de coque intermédiaire et qui définit une partie supérieure de ladite seconde rainure ;
- les première et seconde surfaces sont inclinées d'un angle α par rapport à l'horizontale, cet angle α étant supérieur à un angle β d'inclinaison de ladite partie inférieure de la seconde rainure, qui est également mesuré par rapport à l'horizontale ;
- la partie inférieure de la seconde rainure et la partie supérieure de la seconde rainure définissent chacune une marche de surcompactage de la préforme ;
- les trois éléments de chacune desdites coques d'extrémité comprennent :
   + un élément de coque inférieur qui définit avec la coque inférieure une partie inférieure de la zone de plateforme correspondante,
   + un élément de coque supérieur qui définit avec la coque supérieure une partie supérieure de cette zone de plateforme, et
   + un élément de coque intermédiaire qui est intercalé entre les éléments de coque inférieur et supérieur et qui est configuré pour s'étendre dans le prolongement de la zone de pale ;
- l'élément de coque intermédiaire de chacune desdites coques d'extrémité comprend une nervure en saillie configurée pour être engagée dans un passage interne de la préforme ;
- l'élément de coque intermédiaire comprend des moyens d'indexage configurés pour coopérer avec des moyens complémentaires d'au moins l'une des coques inférieure, supérieure et latérale ;
- les coques et éléments de coque du moule sont fixés par des vis qui traversent des orifices de ces coques ou éléments de coque et sont vissées dans des orifices taraudés d'autres coques ou éléments de coque ;
- le moule a une forme générale parallélépipédique et comprend sur au moins certaines de ces faces des évidements d'allègement du moule.

La présente invention concerne également un procédé de mise en forme d'au moins une préforme pour la réalisation d'une pièce aubagée de turbomachine, au moyen d'un dispositif de mise en forme tel que décrit ci-dessus caractérisé en ce qu'il comprend les étapes de:
a) montage d'une préforme dans la cavité du moule, cette préforme comportant deux plateformes et une pale s'étendant entre les deux plateformes,
b) fermeture du dispositif de mise en forme de façon à compacter la préforme,
c) mise en étuve du dispositif de mise en forme afin de sécher la préforme, et
d) démontage du moule et retrait de la préforme.

Avantageusement, l'étape a) comprend les sous étapes de :
a1) montage de la préforme sur la coque inférieure du moule, ainsi que sur les éléments inférieur et intermédiaire de la coque latérale,
a2) montage de la coque supérieure et de l'élément de coque supérieur de la coque latérale sur la préforme,
a3) montage des éléments de coque intermédiaire des coques d'extrémité, a4) montage des éléments de coque inférieur et supérieur des coques d'extrémité.

Le procédé peut comprendre, avant l'étape a), une étape 0) d'insertion d'un mandrin, tel qu'un bloc de mousse, dans un passage interne de la préforme, ce passage interne s'étendant à l'intérieur de la pale et débouchant au niveau des plateformes.

Le procédé peut comprendre entre les sous étapes a1) et a2), une sous étape y) supplémentaire d'installation d'un organe de positionnement du mandrin (bloc de mousse) à chacune des extrémités de la préforme, et entre les sous étapes a2) et a3), une sous étape z) de retrait de ces organes de positionnement.

Le procédé peut comprendre, entre les étapes c) et d), une étape x) d'appairage d'un bouclier métallique sur le bord d'attaque de la préforme, cette étape comprenant les sous étapes de :
x1) démontage et retrait de l'élément de coque supérieur de la coque latérale,
x2) démontage et retrait de l'élément de coque intermédiaire de la coque latérale, et
x3) positionnement du bouclier sur le bord d'attaque de la préforme.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une pièce aubagée de turbomachine ;
[Fig.2] la figure 2 est une vue schématique en perspective d'un dispositif de mise en forme selon un mode de réalisation de l'invention ;
[Fig.3] la figure 3 est une autre vue schématique en perspective du dispositif de la figure 2 ;
[Fig.4] la figure 4 est une vue schématique en coupe selon la ligne IV-IV des figures 2 et 3, et montre la préforme située dans le dispositif ;
[Fig.5] la figure 5 est une vue schématique partielle en coupe selon la ligne V-V des figures 2 et 3, et montre la préforme située dans le dispositif ;
[Fig.6] la figure 6 est une vue à plus grande échelle d'une partie de la figure 4 ;
[Fig.7] la figure 7 est une vue schématique en perspective d'une coque inférieure et d'éléments d'une coque latérale du moule du dispositif de la figure 2, et sur lesquels est disposée une préforme pour une aube à plateformes intégrées ;
[Fig.8] la figure 8 est une vue schématique en perspective de l'ensemble de la figure 7 et sur lequel est rapporté la coque supérieure du moule ;
[Fig.9] la figure 9 est une vue schématique en perspective de l'ensemble de la figure 8 et sur lequel sont rapportés des éléments intermédiaires de coques d'extrémité du moule ;
[Fig.10] la figure 10 est une vue schématique en perspective de l'ensemble de la figure 9 et sur lequel sont rapportés des éléments inférieurs de coques d'extrémité du moule ;
[Fig.11] la figure 11 est une vue schématique en perspective de l'ensemble de la figure 10 et sur lequel sont rapportés des éléments supérieurs de coques d'extrémité du moule, les éléments supérieur et intermédiaire de la coque latérale ayant par ailleurs été retirés ; et
[Fig.12] la figure 12 est un organigramme illustrant des étapes et sous étapes d'un procédé selon l'invention de mise en forme d'une préforme.

### Description détaillée de l'invention

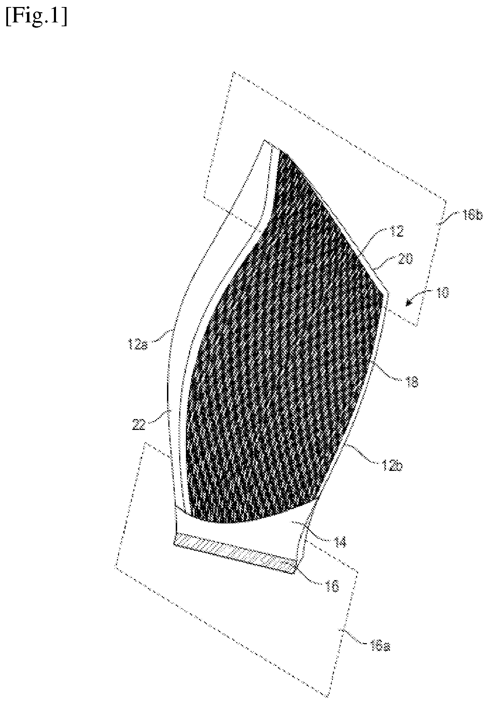

On se réfère d'abord à la figure 1 qui illustre une pièce aubagée 10 en matériau composite pour une turbomachine, cette pièce aubagée 10 étant par exemple une aube de soufflante ou un aubage de redresseur d'un flux secondaire dans le cas d'un turboréacteur à double flux.

La pièce aubagée 10 comprend une pale 12. Dans le cas représenté où la pièce 10 est une aube de soufflante, cette pale 12 est reliée par une échasse 14 à un pied 16 qui a par exemple une forme en queue d'aronde et est conformé pour être engagé dans une alvéole de forme complémentaire d'un disque de rotor, afin de retenir l'aube sur ce disque.

Dans le cas en variante où la pièce 10 est un aubage de redresseur, la pale 12 s'étend entre deux plateformes 16a, 16b qui s'étendent sensiblement parallèlement entre elles et perpendiculairement à un axe d'allongement de la pale 14.

La pale 12 comprend un bord d'attaque 12a et un bord de fuite 12b des gaz qui s'écoulent dans la turbomachine. La pale 12 a un profil aérodynamique incurvé voire vrillé et comprend un intrados 18 et un extrados 20 s'étendant entre les bords d'attaque 12a et de fuite 12b.

La pale 12 est réalisée à partir d'une préforme fibreuse obtenue par tissage en trois dimensions de fibres, par exemple en carbone.

Le bord d'attaque 12a de la pale est renforcé et protégé par un bouclier métallique 22 qui est fixé sur ce bord d'attaque 12a. Le bouclier 22 est par exemple en alliage à base de nickel et cobalt.

Dans la présente invention, le positionnement correct du bouclier 22 sur la préforme est réalisé avec un dispositif 30 de mise en forme de cette préforme, cette mise en forme étant réalisée de préférence par compression et chauffage.

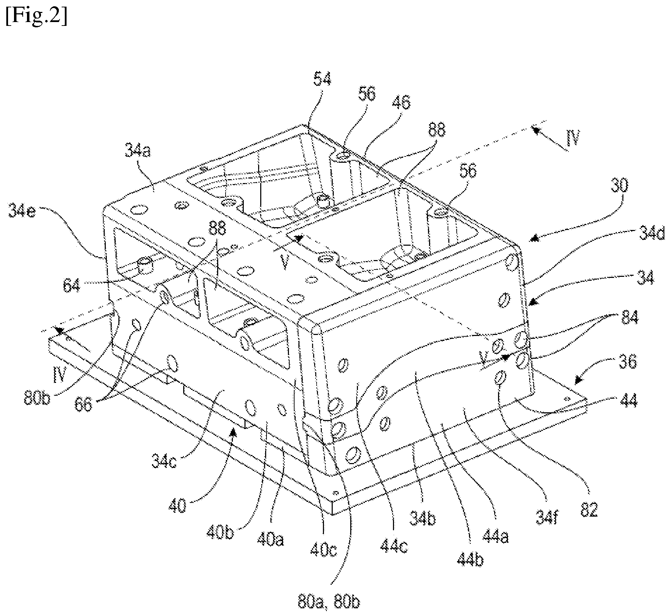

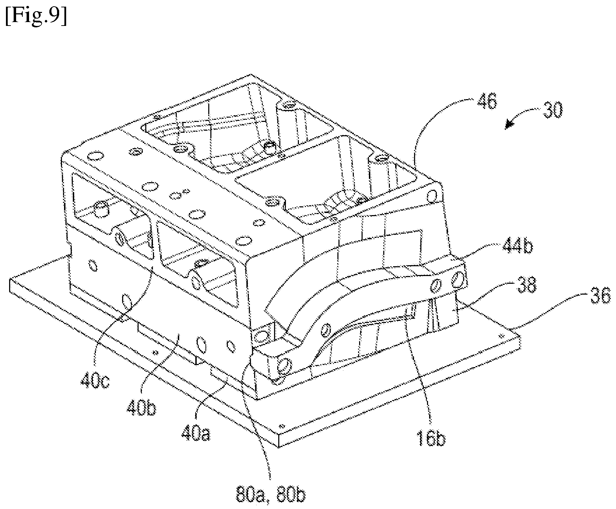

Un mode de réalisation du dispositif 30 selon l'invention est représenté aux figures 2 à 11.

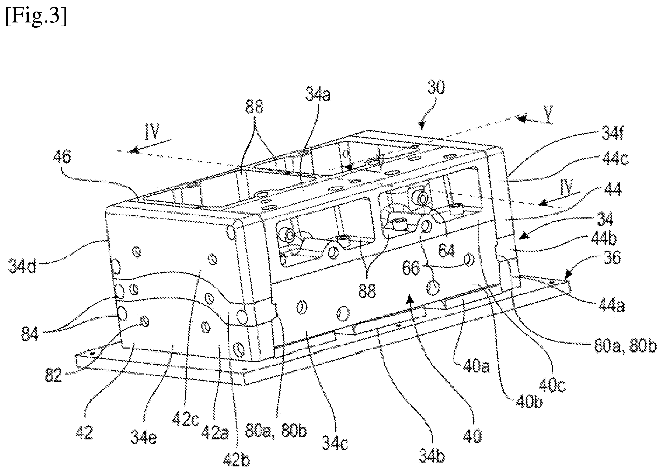

Le dispositif 30 est représenté dans son intégralité aux figures 2 et 3. Dans l'exemple représenté, il a une forme générale parallélépipédique.

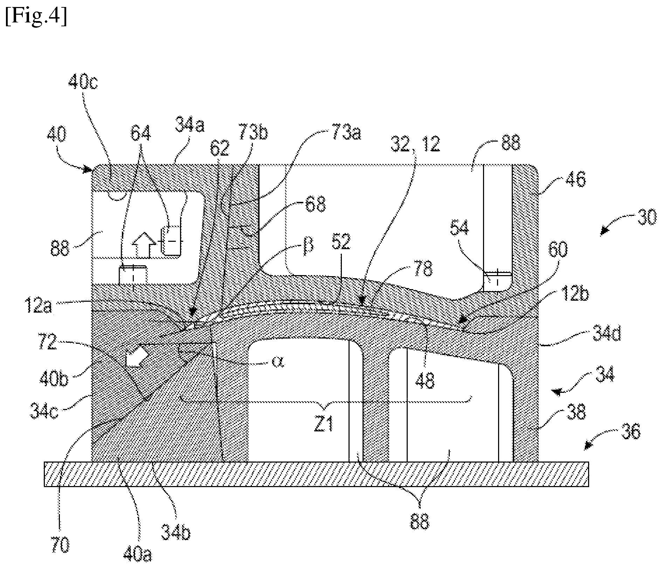

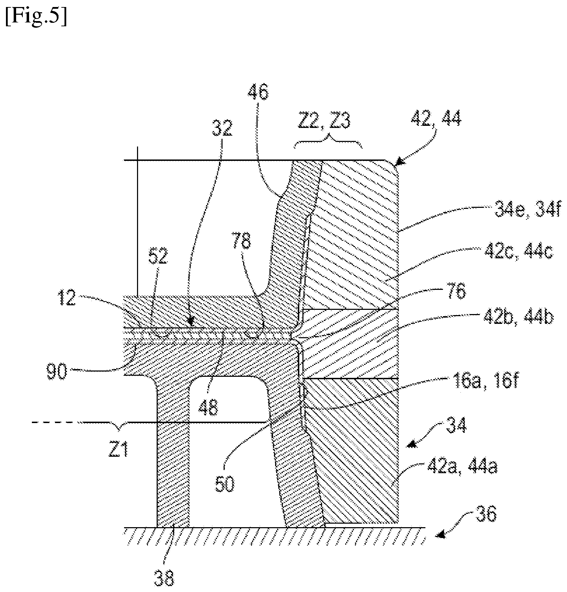

Les figures 4 et 5 représentent des vues en coupe du dispositif 30 et montrent qu'il comprend au moins une cavité interne 32 configurée pour recevoir la préforme fibreuse de la ou de chaque pièce aubagée 10 à réaliser. Dans l'exemple représenté, cette pièce aubagée 10 est un aubage de redresseur. On peut donc constater que la cavité 32 comprend pour l'essentiel trois parties ou zones, une zone de pale Z1 destinée à recevoir la partie de la préforme formant la pale 12 de la pièce aubagée 10, et deux zones de plateforme Z2, Z3 destinées à recevoir les parties de la préforme formant les plateformes 16a, 16b de la pièce aubagée 10.

Le dispositif 30 comprend pour l'essentiel un moule 34. Dans l'exemple représenté, ce moule est présenté sur un support plan ou une embase 36, qui est toutefois facultatif.

Le moule 34 a une forme générale parallélépipédique et comprend une face supérieure 34a, une face inférieure 34b et quatre faces latérales 34c-34f. Les faces 34a-34f sont ici rectangulaires. Le moule 34 est posé à plat sur l'embase 36 par appui de sa face inférieure 34b sur cette embase 36.

Les faces latérales 34e, 34f sont situées sur deux côtés opposés du moule 34 et au niveau des zones de plateforme Z2, Z3 de la cavité 32 (cf. figure 5). Les faces latérales 34c, 34d sont situées sur deux côtés opposés du moule 34 et au niveau respectivement des bords d'attaque 12a et de fuite 12b de la pale 12 (cf. figure 4).

Le moule 34 est obtenu par l'assemblage de plusieurs pièces pour faciliter son montage autour de la préforme et pour faciliter également le positionnement et le compactage de la préforme tout en autorisant un accès au bord d'attaque 12a de la préforme en vue du positionnement du bouclier métallique 22.

Les pièces du moule 34 sont ici formées par des coques ou éléments de coque qui sont imbriqués les uns dans les autres afin de définir la cavité 32. Comme cela est visible dans les dessins, la cavité 32 est entièrement délimitée par le moule 34, ce qui signifie que le moule 34 est configuré pour enfermer intégralement la préforme.

Dans l'exemple représente non limitatif, le moule 34 comprend pour l'essentiel cinq coques, à savoir :
- une coque inférieure 38,
- une coque latérale 40,
- deux coques d'extrémité 42, 44, et
- une coque supérieure 46.

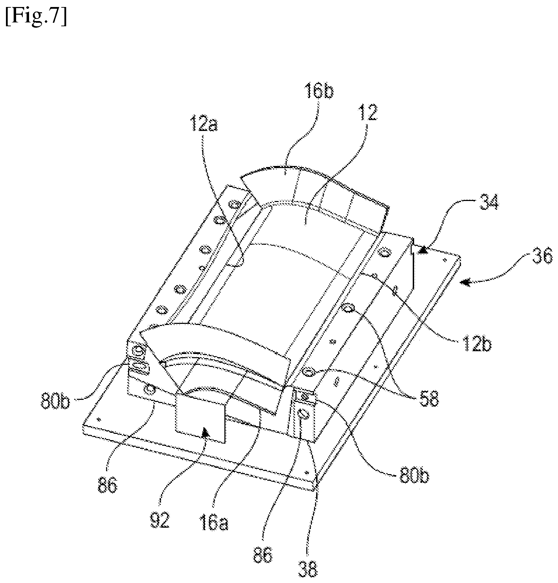

La coque inférieure 38 est visible aux figures 4 et 5 et montée sur l'embase 36 à la figure 7. Cette coque 38 forme une partie de l'extrémité inférieure du moule 34 et comprend une partie de la face 34b et une partie inférieure de la face 34d.

La coque inférieure 38 définit une partie inférieure de la cavité 32 et comprend une surface supérieure 48 ayant en section une forme incurvée convexe (cf. figure 4) destinée à être située du côté de l'intrados 18 de la pale 12.

La figure 5 permet de constater que la surface 48 est reliée au niveau des zones de plateforme Z2, Z3 de la cavité 32 à des surfaces d'extrémité 50 qui sont sensiblement parallèles entre elles et perpendiculaires à la surface 48. La coque inférieure 38 définit ainsi une partie inférieure de chacune des zones de plateforme Z2, Z3 de la cavité 32.

La coque supérieure 46 forme une partie de l'extrémité supérieure du moule 34 et comprend une partie de la face 34a et une partie supérieure de la face 34d.

La coque 46 définit une partie supérieure de la cavité 32 et comprend une surface inférieure 52 ayant en section une forme incurvée concave (cf. figure 4) destinée à être située du côté de l'extrados 20 de la pale 12.

Les coques supérieure 46 et inférieure 38 sont fixées l'une sur l'autre par exemple par des vis 54 qui traversent des orifices 56 de la coque supérieure et sont vissées dans des orifices taraudés 58 de la coque inférieure (cf. figures 2, 4 et 7).

Les coques supérieure 46 et inférieure 38 définissent un premier côté du moule 34 et forment entre elles une première rainure 60 de formation du bord de fuite 12b de la pale 12 (figure 4).

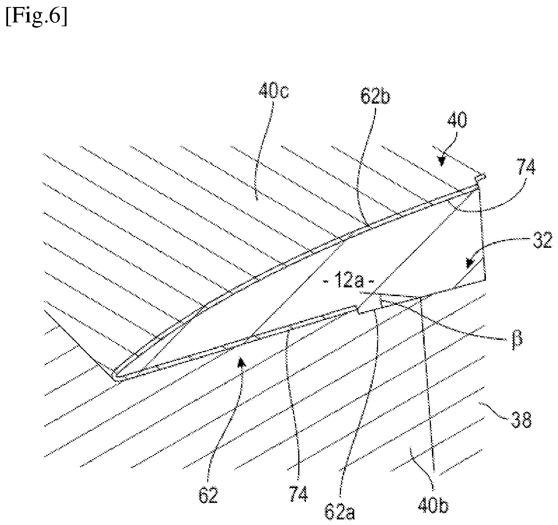

La coque latérale 40 est visible aux figures 2 à 4 notamment et forme un second côté du moule 34 à savoir celui qui comprend la surface 34c située du côté du bord d'attaque 12a de la pale 12. La coque 40 forme une seconde rainure 62 de formation du bord d'attaque 12a de la pale (figures 4 et 6).

La coque latérale 40 est fixée sur les coques inférieure 38 et supérieure 46 par des vis 64 qui traversent des orifices 66 de la coque latérale 40 et sont vissées dans des orifices taraudés 68 des coques inférieure 38 et supérieure 46 (figures 2 à 4 et 11).

Comme cela est visible à la figure 4 notamment, la coque latérale 40 comprend trois éléments, respectivement inférieur 40a, intermédiaire 40b et supérieur 40c, qui sont fixés de manière indépendante et amovible de façon à pouvoir être démontés et retirés du moule 34 sans démontage des coques supérieure 46 et inférieure 38.

Les trois éléments de la coque latérale 40 comprennent :
+ un élément de coque inférieur 40a qui est situé sous la seconde rainure 62 et qui comprend une première surface supérieure 70 de glissement,
+ un élément de coque intermédiaire 40b qui est situé sur l'élément de coque inférieur 40a et qui définit une partie inférieure (référencée 62a à la figure 6) de la seconde rainure 62, cet élément de coque intermédiaire comportant une seconde surface inférieure 72 de glissement qui est configurée pour coopérer par glissement avec la première surface de glissement 70 lors d'un démontage de l'élément de coque intermédiaire 40b, et
+ un élément de coque supérieur 40c qui est situé sur l'élément de coque intermédiaire 40b et qui définit une partie supérieure (référencée 62b à la figure 6) de la seconde rainure 62. Cet élément de coque 40c comporte une surface 73a verticale ou proche de la verticale qui est configurée pour coopérer par glissement avec une surface 73b complémentaire de la coque supérieure 46 lors d'un démontage de l'élément de coque supérieur 40c (figure 4).

Comme cela est visible aux figures 4 et 6, les première et seconde surfaces 70, 72 sont inclinées d'un angle α par rapport à l'horizontale. Cet angle α est supérieur à un angle β d'inclinaison de la partie inférieure 62a de la seconde rainure 62, qui est également mesuré par rapport à l'horizontale.

La figure 6, qui est une vue à plus grande échelle de la seconde rainure 62, montre que les parties inférieure 62a et supérieure 62b de cette seconde rainure 62 définissent chacune une marche 74 de surcompactage de la préforme. La marche 74 permet de définir une position attendue du bouclier pour permettre un meilleur appairage de celui-ci avec la préforme.

Les coques d'extrémité 42, 44 sont destinées à délimiter les zones de plateforme Z2, Z3 de la cavité 32 avec les coques inférieure 38 et supérieure 46 (figure 5).

Une première coque d'extrémité 42 située à gauche à la figure 3 comprend la surface 34e et est formée par l'assemblage de trois éléments 42a, 42b, 42c. Une seconde coque d'extrémité 44 située à droite à la figure 3 comprend la surface 34f et est formée par l'assemblage de trois éléments 44a, 44b, 44c.

Les trois éléments de chacune des coques d'extrémité 42, 44 comprennent (figure 5) :
+ un élément de coque inférieur 42a, 44a qui définit avec la coque inférieure 38 une partie inférieure de la zone de plateforme Z2, Z3 correspondante,
+ un élément de coque supérieur 42c, 44c qui définit avec la coque supérieure 38 une partie supérieure de cette zone de plateforme Z2, Z3, et
+ un élément de coque intermédiaire 42b, 44b qui est intercalé entre les éléments de coque inférieur 42a, 44a et supérieur 42c, 44c et qui est configuré pour s'étendre dans le prolongement de la zone de pale Z1.

L'élément de coque intermédiaire 42b, 44b de chacune des coques d'extrémité 42, 44 comprend une nervure 76 en saillie configurée pour être engagée dans un passage interne 78 de la préforme ;

Cet élément de coque intermédiaire 42b, 44b peut comprendre des moyens d'indexage 80a configurés pour coopérer avec des moyens complémentaires 80b d'au moins l'une des coques inférieure 38, supérieure 46 et latérale 40, comme cela est visible aux figures 2 et 3. Ces moyens d'indexage et complémentaires 80a, 80b coopèrent par exemple par emboitement ou engagement mâle-femelle, et comprennent par exemple des doigts portés par l'élément de coque 42b, 44b et des encoches formées sur la coque inférieure 38.

Chaque élément de coque intermédiaire 42b, 44b comprend des extrémités supérieure et inférieure conformées pour s'emboîter sans jeu dans les extrémités correspondantes des éléments de coque supérieur 42c, 44c et inférieur 42a, 44a, respectivement. Ces extrémités peuvent en outre être conformées pour assurer un détrompage lors du montage et éviter le montage d'un des éléments à la place d'un autre.

Les éléments de coque de chaque coque d'extrémité 42, 44 sont fixés par des vis 82 qui traversent des orifices 84 de ces éléments de coque et sont vissées dans des orifices taraudés 86 d'autres coques ou éléments de coque.

Les figures montrent qu'au moins certaines faces 34a, 34c du moule 34 présentent des évidements 88 d'allègement du moule. C'est notamment le cas, dans l'exemple représenté, de la coque supérieure 46 qui comprend des évidements 88 sur la face supérieure 34a (cf. figures 2 et 3), de l'élément de coque supérieur 40c de la coque latérale 40 qui comprend également des évidement 88 sur la face latérale 34c, et de la coque inférieure 38 qui comprend des évidements 88 sur la face inférieure 34b (cf. figure 4).

La présente invention concerne également un procédé de mise en forme d'une préforme en vue de la réalisation d'une pièce aubagée de turbomachine, au moyen du dispositif 30.

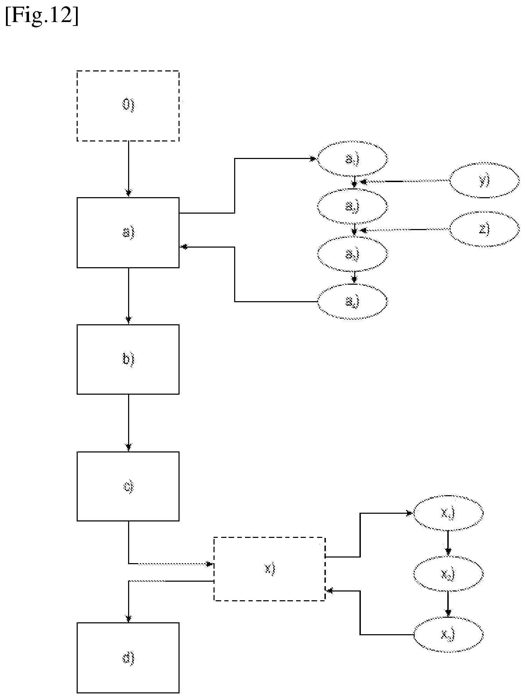

Ce procédé va être décrit en référence aux dessins et est illustré par l'organigramme de la figure 12.

Le procédé comprend pour l'essentiel 4 étapes à savoir les étapes de :
a) montage de la préforme dans la cavité 32 du moule 34, cette préforme comportant deux plateformes 16a, 16b et une pale 12 s'étendant entre les deux plateformes,
b) fermeture du dispositif 30 de façon à compacter la préforme,
c) mise en étuve du dispositif 30 afin de sécher la préforme, et
d) démontage du moule 34 et retrait de la préforme.

Préalablement ou pendant l'étape a), le procédé peut comprendre une étape 0) d'insertion d'un mandrin, tel qu'un bloc de mousse 90, dans le passage interne 78 de la préforme, ce passage interne 78 s'étendant à l'intérieur de la pale et débouchant au niveau des plateformes 16a, 16b.

En effet, lors de la formation de la préforme par tissage de fils, par exemple de carbone, en trois dimensions, une déliaison est réalisée au centre de la pale et sur toute la dimension longitudinale de la pale, de façon à créer ce passage 78 qui est visible en section à la figure 4. Ce passage 78 traverse toute la longueur de la pale 12 pour déboucher au niveau des plateformes 16a, 16b, comme cela est visible à la figure 5. Le mandrin (bloc de mousse 90) est inséré dans ce passage 78 et doit être correctement positionné à l'intérieur du passage 78.

L'étape a) du procédé est illustrée aux figures 7 à 10 notamment.

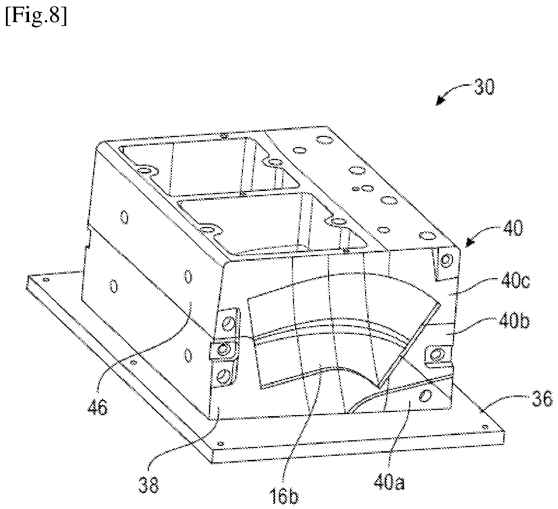

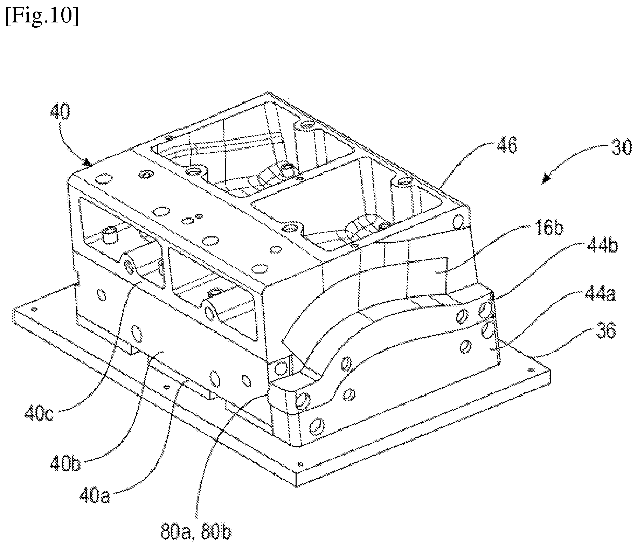

Avantageusement, l'étape a) comprend les sous étapes de :
a1) montage de la préforme sur la coque inférieure 38 du moule 34, ainsi que sur les éléments inférieur 40a et intermédiaire 40b de la coque latérale 40 (cf. figure 7) ; la pale 12 de la préforme est alors positionnée sur la surface 48 de la coque inférieure 38 et son bord d'attaque 12a est positionné sur la partie inférieure 62a de la rainure 62 (cf. figure 6) ; les plateformes sont quant à elles appliquées en parties sur les surfaces 50 de la coque inférieure 38 (figure 5) ; ce positionnement peut être réalisé de manière précise par projection d'un faisceau laser sur la préforme et le moule et alignement de traceurs (fibres de verre exemple) ou de repère de la préforme et du moule 40 avec cette projection,
a2) montage de la coque supérieure 46 sur la préforme et la coque inférieure 38, et montage de l'élément de coque supérieur 40c de la coque latérale 40 sur l'élément de coque intermédiaire 40b (cf. figure 8),
a3) montage des éléments de coque intermédiaire 42b, 44b des coques d'extrémité 42, 44 ; ceci permet aux nervures 76 précitées d'être engagées dans les extrémités du passage 78 de la pale et de prendre appui sur les extrémités du mandrin (bloc de mousse 90) afin de le localiser correctement dans le passage ; ceci permet en outre d'assurer le formage parfait des rayons de la pale de la préforme sans flambage lors de la compression et du séchage ; en effet, les rayons sont les zones critiques de la pièce et le flambage induirait une réduction drastique des propriétés mécaniques ; le positionnement correct par indexage des éléments de coque 42b, 44b est assuré par la coopération des moyens 80a, 80b précités,
a4) montage des éléments de coque inférieur 42a, 44a et supérieur 42c, 44c des coques d'extrémité 42, 44 (cf. figure 10 puis figures 2 et 3).

Entre les sous étapes a1) et a2), le procédé peut comprendre une sous étape y) supplémentaire d'installation d'un organe de positionnement 92 du mandrin (bloc de mousse 90) à chacune des extrémités de la préforme. Un de ces organes 92 est visible à la figure 7 et peut être posé ou monté sur l'embase 36. Ces organes 92 servent à maintenir le mandrin (bloc de mousse 90) en position avant le montage et la fixation de la coque supérieure 46. Après fixation de cette coque supérieure 46, la pale 12 est maintenue fixement entre les coques inférieure 38 et supérieure 46 et le mandrin (bloc de mousse 90) n'est plus susceptible de bouger dans le passage 78. Les organes 92 ne sont alors plus nécessaires et le procédé comprend alors, entre les sous étapes a2) et a3), une sous étape z) de retrait de ces organes de positionnement.

Le dispositif 30 est fermé à l'étape b) afin de serrer les coques du moule 34 les unes contre les autres, et compacter la préforme. L'ensemble est mis à l'étuve à l'étape c) pour sécher la préforme et figer la forme prédéterminée par la mise en forme et la compaction.

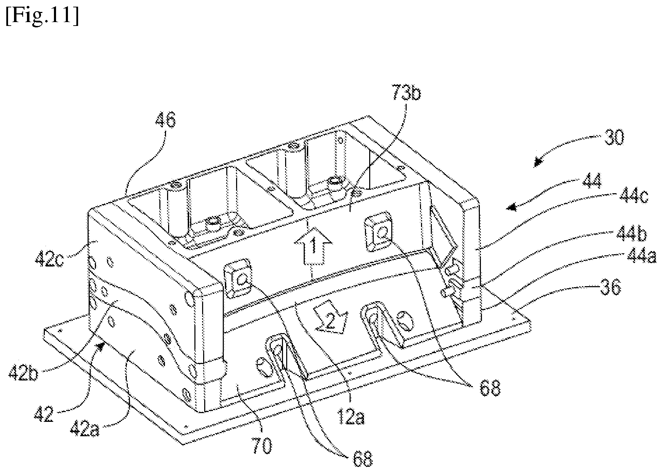

Le procédé peut en outre comprendre, entre les étapes c) et d), une étape x) d'appairage du bouclier métallique 22 sur le bord d'attaque 12a de la préforme. Cette étape x) est illustrée aux figures 4 et 11 et comprend les sous étapes de :
x1) démontage et retrait de l'élément de coque supérieur 40c de la coque latérale 40 ; ce déplacement est schématiquement représenté par la flèche 1 et est réalisé du bas vers le haut ; lors de ce déplacement les surfaces 73a, 73b peuvent glisser l'une sur l'autre ; cette sous étape x1) permet de libérer le bord d'attaque 12a du côté de l'extrados de la pale,
x2) démontage et retrait de l'élément de coque intermédiaire 40b de la coque latérale 40 ; ce déplacement est schématiquement représenté par la flèche 2 et est réalisé dans une direction parallèle aux surfaces 70, 72 car ces surfaces servent de guide ; le fait que l'angle α soit supérieur à l'angle β permet à l'élément de coque 40b d'être retiré sans risque de toucher et de déformer le bord d'attaque et la préforme ; cette sous étape x2) permet de libérer le bord d'attaque 12a du côté de l'intrados de la pale ; le bord d'attaque12a est donc entièrement libre, et
x3) positionnement du bouclier 22 sur le bord d'attaque 12a de la préforme. Le positionnement du bouclier 22 peut alors être réalisé par projection laser de son contour sur la préforme. Cela a pour avantage de positionner le bouclier dans le référentiel du dispositif 30 et donc d'en assurer un bon positionnement, contrairement à si cela avait été fait par rapport à la préforme (par exemple par rapport à des traceurs). Lors de cette opération, la préforme (qui avait été calée dans le référentiel moule) est maintenue par le reste du moule et ne peut être bougée.

Le surcompactage évoqué dans ce qui précède en relation avec la figure 6 permet de faciliter le montage du bouclier 22 sur le bord d'attaque 12a. Ce surcompactage peut être déterminé pour que l'écrasement et la réduction d'épaisseur supplémentaire générée compense l'épaisseur du bouclier 22, le retour élastique de la préforme (lors du démontage des coques), éventuellement l'épaisseur du film de colle et un jeu suffisant pour permettre l'insertion du bouclier. Dans le cas où le bouclier 22 serait immobilisé sur le bord d'attaque 12a par de la colle, cette réduction d'épaisseur pourrait compenser également l'épaisseur du film de colle voire de la variation d'épaisseur de ce film.

Lors de l'étape x), la pale 12 et le bord d'attaque 12a peuvent avoir une orientation générale horizontale, comme montré dans les dessins. En variante, la pale 12 et le bord d'attaque pourraient être orientés sensiblement verticalement pour faciliter le montage du bouclier 22 sur le bord d'attaque. Lors d'une étape suivante, la préforme séchée et rigidifiée peut être transférée dans un autre moule en vue de l'injection de résine dans la préforme et la solidification de la pièce aubagée 10.

Le dispositif selon l'invention est avantageux dans la mesure où il est adapté et optimisé pour la mise en forme de la préforme et l'appairage du bouclier. A titre d'exemple, il ne comprend pas forcément de moyens d'étanchéité tels que des joints contrairement à un moule d'injection de résine. Par ailleurs, il peut être réalisé dans un matériau léger ou bon conducteur thermique (pour optimiser le cycle de chauffage), tel qu'en aluminium par exemple, de façon à faciliter sa manipulation.

Bien que cela ne soit pas représenté, le dispositif selon l'invention pourrait être utilisé pour la fabrication simultanée de plusieurs pièces aubagées et pourrait comprendre une cavité de réception de plusieurs préformes ou bien plusieurs cavités distinctes de réception de ces préformes.

## Revendications

1. Dispositif (30) de mise en forme d'au moins une préforme fibreuse pour la réalisation d'une pièce aubagée (10) de turbomachine, ce dispositif comportant un moule (34) formé de plusieurs pièces imbriquées les unes dans les autres, ce moule définissant au moins une cavité interne (32) configurée pour recevoir la préforme et pour enfermer intégralement ladite préforme, cette cavité (32) étant destinée à avoir deux zones de plateforme (Z2, Z3) et une zone de pale (Z1) s'étendant entre les deux zones de plateforme,
**caractérisé en ce que** ledit moule (34) comprend au moins :
- une coque inférieure (38) qui forme une extrémité inférieure du moule (34) et qui comprend une surface incurvée convexe (48) de ladite zone de pale (Z1),
- une coque supérieure (46) qui forme une extrémité supérieure du moule (34) et qui comprend une surface incurvée concave (52) de ladite partie de pale (Z1), les coques supérieure et inférieure (46, 38) étant fixées l'une sur l'autre, définissant un premier côté du moule et formant entre elles une première rainure (60) de formation d'un bord de fuite (12b) de ladite zone de pale (Z1),
- une coque latérale (40) qui forme un second côté du moule (34), ce second côté étant opposé au premier côté et formant une seconde rainure (62) de formation d'un bord d'attaque (12a) de ladite zone de pale (Z1), et
- des coques d'extrémité (42, 44) situées à deux extrémités opposées du moule et entre lesquelles s'étendent les coques inférieure (38), supérieure (46) et latérale (40), ces coques d'extrémité formant respectivement au moins une partie desdites zones de plateforme (Z2, Z3),
et **en ce que** chacune des coques latérale (40) et d'extrémité (42, 44) comprend trois éléments, respectivement inférieur (40a, 42a, 44a), intermédiaire (40b 42b, 44b) et supérieur (40c, 42c, 44c), les éléments des coques latérale (40) et d'extrémité (42, 44) étant fixés de manière indépendante et amovible de façon à pouvoir être démontés et retirés du moule sans démontage des coques supérieure (46) et inférieure (38).

2. Dispositif de mise en forme (30) selon la revendication précédente, dans lequel les trois éléments de ladite coque latérale (40) comprennent :
- un élément de coque inférieur (40a) qui est situé sous ladite seconde rainure (62) et qui comprend une première surface supérieure de glissement (70),
- un élément de coque intermédiaire (40b) qui est situé sur l'élément de coque inférieur (40a) et qui définit une partie inférieure (62a) de ladite seconde rainure (62), cet élément de coque intermédiaire (40b) comportant une seconde surface inférieure de glissement (72) qui est configurée pour coopérer par glissement avec ladite première surface (70) lors d'un démontage de l'élément de coque intermédiaire (40b), et
- un élément de coque supérieur (40c) qui est situé sur l'élément de coque intermédiaire (40b) et qui définit une partie supérieure (62b) de ladite seconde rainure (62).

3. Dispositif de mise en forme (30) selon la revendication précédente, dans lequel les première et seconde surfaces (70, 72) sont inclinées d'un angle α par rapport à l'horizontale, cet angle α étant supérieur à un angle β d'inclinaison de ladite partie inférieure (62b) de la seconde rainure (62), qui est également mesuré par rapport à l'horizontale.

4. Dispositif de mise en forme (30) selon la revendication 2 ou 3, dans lequel la partie inférieure (62a) de la seconde rainure (62) et la partie supérieure (62b) de la seconde rainure (62) définissent chacune une marche (74) de surcompactage de la préforme.

5. Dispositif de mise en forme (30) selon l'une des revendications précédentes, dans lequel les trois éléments de chacune desdites coques d'extrémité (42, 44) comprennent :
- un élément de coque inférieur (42a, 44a) qui définit avec la coque inférieure (38) une partie inférieure de la zone de plateforme (Z2, Z3) correspondante,
- un élément de coque supérieur (42c, 44c) qui définit avec la coque supérieure (46) une partie supérieure de cette zone de plateforme (Z2, Z3), et
- un élément de coque intermédiaire (42b, 44b) qui est intercalé entre les éléments de coque inférieur et supérieur (42a, 44a, 42c, 44c) et qui est configuré pour s'étendre dans le prolongement de la zone de pale (Z1).

6. Dispositif de mise en forme (30) selon l'une des revendications précédentes, dans lequel l'élément de coque intermédiaire (42b, 44b) de chacune desdites coques d'extrémité (42, 44) comprend une nervure en saillie (76) configurée pour être engagée dans un passage interne (78) de la préforme.

7. Dispositif de mise en forme (30) selon l'une des revendications précédentes, dans lequel l'élément de coque intermédiaire (42b, 44b) comprend des moyens d'indexage (80a) configurés pour coopérer avec des moyens (80b) complémentaires d'au moins l'une des coques inférieure (38), supérieure (46) et latérale (40).

8. Dispositif de mise en forme (30) selon l'une des revendications précédentes, dans lequel les coques et éléments de coque du moule (34) sont fixés par des vis (54, 64, 82) qui traversent des orifices (56, 66, 84) de ces coques ou éléments de coque et sont vissées dans des orifices taraudés (58, 68, 86) d'autres coques ou éléments de coque.

9. Dispositif de mise en forme (30) selon l'une des revendications précédentes, dans lequel le moule (34) a une forme générale parallélépipédique et comprend sur au moins certaines de ces faces des évidements (88) d'allègement du moule.

10. Procédé de mise en forme d'au moins une préforme pour la réalisation d'une pièce aubagée (10) de turbomachine, au moyen d'un dispositif de mise en forme (30) selon l'une des revendications précédentes, **caractérisé en ce qu'**il comprend les étapes de:
a) montage d'une préforme dans la cavité (32) du moule (34), cette préforme comportant deux plateformes (16a, 16b) et une pale (12) s'étendant entre les deux plateformes,
b) fermeture du dispositif de mise en forme (30) de façon à compacter la préforme,
c) mise en étuve du dispositif de mise en forme (30) afin de sécher la préforme, et
d) démontage du moule (34) et retrait de la préforme.

11. Procédé selon la revendication 10, dans lequel l'étape a) comprend les sous étapes de :
a1) montage de la préforme sur la coque inférieure (38) du moule (34), ainsi que sur les éléments inférieur (40a) et intermédiaire (40b) de la coque latérale (40),
a2) montage de la coque supérieure (46) et de l'élément de coque supérieur (40c) de la coque latérale (40) sur la préforme,
a3) montage des éléments de coque intermédiaire (42b, 44b) des coques d'extrémité (42, 44),
a4) montage des éléments de coque inférieur (42a, 44a) et supérieur (42c, 44c) des coques d'extrémité (42, 44).

12. Procédé selon la revendication 10 ou 11, dans lequel il comprend, avant l'étape a), une étape 0) d'insertion d'un mandrin, tel qu'un bloc de mousse (90), dans un passage interne (78) de la préforme, ce passage interne s'étendant à l'intérieur de la pale (12) et débouchant au niveau des plateformes (16a, 16b).

13. Procédé selon la revendication 12, dans lequel il comprend entre les sous étapes a1) et a2), une sous étape y) supplémentaire d'installation d'un organe (92) de positionnement du mandrin à chacune des extrémités de la préforme, et entre les sous étapes a2) et a3), une sous étape z) de retrait de ces organes de positionnement (92).

14. Procédé selon l'une des revendications 10 à 13, dans lequel il comprend, entre les étapes c) et d), une étape x) d'appairage d'un bouclier métallique (22) sur le bord d'attaque (12a) de la préforme, cette étape comprenant les sous étapes de :
x1) démontage et retrait de l'élément de coque supérieur (40c) de la coque latérale (40),
x2) démontage et retrait de l'élément de coque intermédiaire (40b) de la coque latérale (40), et
x3) positionnement du bouclier (22) sur le bord d'attaque (12a) de la préforme.

## Patentansprüche

1. Vorrichtung (30) zur Ausformung mindestens einer faserigen Vorform für die Herstellung eines beschaufelten Werkstückes (10) einer Turbomaschine, wobei diese Vorrichtung eine Form (34) umfasst, die aus mehreren ineinandergreifenden Werkstücken gebildet ist, wobei diese Form mindestens einen Innenhohlraum (32) definiert, der konfiguriert ist, um die Vorform aufzunehmen und um die Vorform vollständig zu umschließen, wobei dieser Hohlraum (32) dazu bestimmt ist, zwei Plattformzonen (Z2, Z3) und eine Schaufelzone (Z1) zu haben, die sich zwischen den beiden Plattformzonen erstreckt,
**dadurch gekennzeichnet, dass** die Form (34) mindestens umfasst:
- eine untere Schale (38), die ein unteres Ende der Form (34) bildet und die eine gekrümmte, konvexe Oberfläche (48) der Schaufelzone (Z1) umfasst,
- eine obere Schale (46), die ein oberes Ende der Form (34) bildet und die eine gekrümmte, konkave Oberfläche (52) des Schaufelteils (Z1) umfasst, wobei die obere und die untere Schale (46, 38) aneinander befestigt sind, eine erste Seite der Form definieren und zwischen sich eine erste Nut (60) zur Bildung einer Hinterkante (12b) der Schaufelzone (Z1) bilden,
- eine seitliche Schale (40), die eine zweite Seite der Form (34) bildet, wobei diese zweite Seite der ersten Seite gegenüberliegt und eine zweite Nut (62) zur Bildung einer Vorderkante (12a) der Schaufelzone (Z1) bildet, und
- Endschalen (42, 44), die sich an zwei gegenüberliegenden Enden der Form befinden und zwischen denen sich die untere Schale (38), die obere Schale (46) und die seitliche Schale (40) erstrecken, wobei diese Endschalen jeweils mindestens einen Teil der Plattformzonen (Z2, Z3) bilden,
und dass jede der seitlichen Schale (40) und der Endschale (42, 44) drei Elemente umfasst, jeweils ein unteres (40a, 42a, 44a), ein mittleres (40b 42b, 44b) und ein oberes (40c, 42c, 44c), wobei die Elemente der seitlichen Schale (40) und der Endschale (42, 44) unabhängig und abnehmbar befestigt sind, so dass sie ohne Ausbau der oberen Schale (46) und der unteren Schale (38) ausgebaut und aus der Form entfernt werden können.

2. Ausformungsvorrichtung (30) nach dem vorstehenden Anspruch, wobei die drei Elemente der seitlichen Schale (40) umfassen:
- ein unteres Schalenelement (40a), das sich unter der zweiten Nut (62) befindet und das eine erste obere Gleitoberfläche (70) umfasst,
- ein Zwischenschalenelement (40b), das sich auf dem unteren Schalenelement (40a) befindet und das einen unteren Teil (62a) der zweiten Nut (62) definiert, wobei das Zwischenschalenelement (40b) eine zweite untere Gleitoberfläche (72) aufweist, die konfiguriert ist, um bei einem Ausbau des Zwischenschalenelements (40b) gleitend mit der ersten Oberfläche (70) zusammenzuwirken, und
- ein oberes Schalenelement (40c), das sich auf dem Zwischenschalenelement (40b) befindet und das einen oberen Tei (62b) der zweiten Nut (62) definiert.

3. Ausformungsvorrichtung (30) nach dem vorstehenden Anspruch, wobei die erste und die zweite Oberfläche (70, 72) um einen Winkel α in Bezug auf die Horizontale geneigt sind, wobei der Winkel α größer ist als ein Neigungswinkel β des unteren Teils (62b) der zweiten Nut (62), der ebenfalls in Bezug auf die Horizontale gemessen wird.

4. Ausformungsvorrichtung (30) nach Anspruch 2 oder 3, wobei der untere Teil (62a) der zweiten Nut (62) und der obere Teil (62b) der zweiten Nut (62) jeweils eine Stufe (74) zum Überverdichten der Vorform definieren.

5. Ausformungsvorrichtung (30) nach einem der vorstehenden Ansprüche, wobei die drei Elemente jeder der Endschalen (42, 44) umfassen:
- ein unteres Schalenelement (42a, 44a), das mit der unteren Schale (38) einen unteren Teil der entsprechenden Plattformzone (Z2, Z3) definiert,
- ein oberes Schalenelement (42c, 44c), das mit der oberen Schale (46) einen oberen Teil dieser Plattformzone (Z2, Z3) definiert, und
- ein Zwischenschalenelement (42b, 44b), das zwischen dem unteren und dem oberen Schalenelement (42a, 44a, 42c, 44c) eingefügt ist und konfiguriert ist, um sich in die Verlängerung der Schaufelzone (Z1) zu erstrecken.

6. Ausformungsvorrichtung (30) nach einem der vorstehenden Ansprüche, wobei das Zwischenschalenelement (42b, 44b) jeder der Endschalen (42, 44) eine vorstehende Rippe (76) umfasst, die konfiguriert ist, um mit einem inneren Durchgang (78) der Vorform in Eingriff zu kommen.

7. Ausformungsvorrichtung (30) nach einem der vorstehenden Ansprüche, wobei das Zwischenschalenelement (42b, 44b) Indexierungsmittel (80a) umfasst, die konfiguriert sind, um mit komplementären Mitteln (80b) von mindestens einer der unteren Schale (38), der oberen Schale (46) und der seitlichen Schale (40) zusammenzuwirken.

8. Ausformungsvorrichtung (30) nach einem der vorstehenden Ansprüche, wobei die Schalen und Schalenelemente der Form (34) durch Schrauben (54, 64, 82) befestigt sind, die durch Öffnungen (56, 66, 84) dieser Schalen oder Schalenelemente hindurchgehen und in Gewindeöffnungen (58, 68, 86) anderer Schalen oder Schalenelemente eingeschraubt sind.

9. Ausformungsvorrichtung (30) nach einem der vorstehenden Ansprüche, wobei die Form (34) eine im Allgemeinen parallelepipedische Form aufweist und auf mindestens bestimmten dieser Seiten Aussparungen (88) zur Entlastung der Form umfasst.

10. Verfahren zum Ausformen mindestens einer Vorform für die Herstellung eines beschaufelten Werkstücks (10) einer Turbomaschine mittels einer Ausformungsvorrichtung (30) nach einem der vorstehenden Ansprüche, **dadurch gekennzeichnet, dass** es die folgenden Schritte umfasst:
a) Montieren einer Vorform in den Hohlraum (32) der Form (34), wobei diese Vorform zwei Plattformen (16a, 16b) und ein Blatt (12) umfasst, das sich zwischen den beiden Plattformen erstreckt,
b) Schließen der Ausformungsvorrichtung (30), um die Vorform zu verdichten,
c) Einbringen der Ausformungsvorrichtung (30) in einen Trockenofen, um die Vorform zu trocknen, und
d) Ausbauen der Form (34) und Entfernen der Vorform.

11. Verfahren nach Anspruch 10, wobei Schritt a) die folgenden Unterschritte umfasst:
a1) Montieren der Vorform an der unteren Schale (38) der Form (34) sowie an dem unteren Element (40a) und dem Zwischenelement (40b) der seitlichen Schale (40),
a2) Montieren der oberen Schale (46) und des oberen Schalenelements (40c) der seitlichen Schale (40) auf der Vorform,
a3) Montieren der Zwischenschalenelemente (42b, 44b) der Endschalen (42, 44),
a4) Montieren der unteren (42a, 44a) und oberen (42c, 44c) Schalenelemente der Endschalen (42, 44).

12. Verfahren nach Anspruch 10 oder 11, wobei es vor Schritt a) einen Schritt 0) des Einführens eines Dorns, wie z. B. eines Schaumstoffblocks (90), in einen inneren Durchgang (78) der Vorform umfasst, wobei sich dieser innere Durchgang im Inneren des Blattes (12) erstreckt und im Bereich der Plattformen (16a, 16b) mündet.

13. Verfahren nach Anspruch 12, wobei es zwischen den Unterschritten a1) und a2) einen zusätzlichen Unterschritt y) zum Installieren eines Organs (92) zur Positionierung des Dorns an jedem der Enden der Vorform umfasst, und zwischen den Unterschritten a2) und a3) einen Unterschritt z) zum Entfernen dieser Positionierungsorgane (92).

14. Verfahren nach einem der Ansprüche 10 bis 13, wobei es zwischen den Schritten c) und d) einen Schritt x) des Koppelns eines Metallschildes (22) an der Vorderkante (12a) der Vorform umfasst, wobei dieser Schritt die folgenden Unterschritte umfasst:
x1) Ausbauen und Entfernen des oberen Schalenelements (40c) aus der seitlichen Schale (40),
x2) Ausbauen und Entfernen des Zwischenschalenelements (40b) aus der seitlichen Schale (40), und
x3) Positionieren des Schildes (22) an der Vorderkante (12a) der Vorform.

## Claims

1. A device (30) for shaping at least one fibrous preform for producing a bladed part (10) of a turbomachine, this device including a mould (34) formed by several parts that are interlocked with each other, this mould defining at least one internal cavity (32) configured to receive the preform and to enclose said preform integrally, this cavity (32) being intended to have two platform areas (Z2, Z3) and a blade area (Z1) extending between the two platform areas,
**characterised in that** said mould (34) comprises at least:
- a lower shell (38) which forms a lower end of the mould (34) and which comprises a convex curved surface (48) of said blade area (Z1),
- an upper shell (46) which forms an upper end of the mould (34) and which comprises a concave curved surface (52) of said blade portion (Z1), the upper and lower shells (46, 38) being fastened to each other, defining a first side of the mould and forming therebetween a first groove (60) for forming a trailing edge (12b) of said blade area (Z1),
- a side shell (40) which forms a second side of the mould (34), this second side being opposite to the first side and forming a second groove (62) for forming a leading edge (12a) of said blade area (Z1), and
- end shells (42, 44) located at two opposite ends of the mould and between which the lower (38), upper (46) and side (40) shells extend, these end shells respectively forming at least one portion of said platform areas (Z2, Z3),
and **in that** each of the side (40) and end (42, 44) shells comprises three elements, respectively lower (40a, 42a, 44a), intermediate (40b, 42b, 44b) and upper (40c, 42c, 44c), the elements of the side (40) and end (42, 44) shells being independently and removably fastened so as to be able to be dismounted and removed from the mould without dismounting the upper (46) and lower (38) shells.

2. The shaping device (30) according to the preceding claim, wherein the three elements of said side shell (40) comprise:
- a lower shell element (40a) which is located under said second groove (62) and which comprises a first upper sliding surface (70),
- an intermediate shell element (40b) which is located on the lower shell element (40a) and which defines a lower portion (62a) of said second groove (62), this intermediate shell element (40b) including a second lower sliding surface (72) which is configured to slidably cooperate with said first surface (70) when dismounting the intermediate shell element (40b), and
- an upper shell element (40c) which is located on the intermediate shell element (40b) and which defines an upper portion (62b) of said second groove (62).

3. The shaping device (30) according to the preceding claim, wherein the first and second surfaces (70, 72) are inclined at an angle α with respect to the horizontal, this angle α being larger than an angle β of inclination of said lower portion (62b) of the second groove (62), which is also measured with respect to the horizontal.

4. The shaping device (30) according to claim 2 or 3, wherein each of the lower portion (62a) of the second groove (62) and the upper portion (62b) of the second groove (62) defines a step (74) for over-compacting the preform.

5. The shaping device (30) according to one of the preceding claims, wherein the three elements of each of said end shells (42, 44) comprise:
- a lower shell element (42a, 44a) which defines with the lower shell (38) a lower portion of the corresponding platform area (Z2, Z3),
- an upper shell element (42c, 44c) which defines with the upper shell (46) an upper portion of this platform area (Z2, Z3), and
- an intermediate shell element (42b, 44b) which is interposed between the lower and upper shell elements (42a, 44a, 42c, 44c) and which is configured to extend in continuation of the blade area (Z1).

6. The shaping device (30) according to one of the preceding claims, wherein the intermediate shell element (42b, 44b) of each of said end shells (42, 44) comprises a protruding rib (76) configured to be engaged in an internal passage (78) of the preform.

7. The shaping device (30) according to one of the preceding claims, wherein the intermediate shell element (42b, 44b) comprises indexing means (80a) configured to cooperate with complementary means (80b) of at least one of the lower (38), upper (46) and side (40) shells.

8. The shaping device (30) according to one of the preceding claims, wherein the shells and shell elements of the mould (34) are fastened by screws (54, 64, 82) which pass through orifices (56, 66, 84) of these shells or shell elements and are screwed into threaded orifices (58, 68, 86) of other shells or shell elements.

9. The shaping device (30) according to one of the preceding claims, wherein the mould (34) has a parallelepipedal general shape and comprises, on at least some of its faces, recesses (88) for lightening the mould.

10. A method for shaping at least one preform for producing a bladed part (10) of a turbomachine, by means of a shaping device (30) according to one of the preceding claims, **characterised in that** it comprises the steps of:
a) mounting a preform in the cavity (32) of the mould (34), this preform including two platforms (16a, 16b) and a blade (12) extending between the two platforms,
b) closing the shaping device (30) so as to compact the preform,
c) stoving the shaping device (30) in order to dry the preform, and
d) dismounting the mould (34) and removing the preform.

11. The method according to claim 10, wherein step a) comprises the sub-steps of:
a1) mounting the preform on the lower shell (38) of the mould (34), as well as on the lower (40a) and intermediate (40b) elements of the side shell (40),
a2) mounting the upper shell (46) and the upper shell element (40c) of the side shell (40) on the preform,
a3) mounting the intermediate shell elements (42b, 44b) of the end shells (42, 44),
a4) mounting the lower (42a, 44a) and upper (42c, 44c) shell elements of the end shells (42, 44).

12. The method according to claim 10 or 11, wherein it comprises, prior to step a), a step 0) of inserting a mandrel, such as a foam block (90), into an internal passage (78) of the preform, this internal passage extending within the blade (12) and opening at the platforms (16a, 16b).

13. The method according to claim 12, wherein it comprises, between the sub-steps a1) and a2), an additional sub-step y) of installing a member (92) for positioning the mandrel at each of the ends of the preform, and, between the sub-steps a2) and a3), a sub-step z) of removing these positioning members (92).

14. The method according to one of claims 10 to 13, wherein it comprises, between steps c) and d), a step x) of pairing a metal shield (22) on the leading edge (12a) of the preform, this step comprising the sub-steps of:
x1) dismounting and removing the upper shell element (40c) from the side shell (40),
x2) dismounting and removing the intermediate shell element (40b) from the side shell (40), and
x3) positioning the shield (22) on the leading edge (12a) of the preform.
